# EUROPEAN PATENT SPECIFICATION

(11) **EP 3 119 189 B1**
(45) Date of publication and mention of the grant of the patent: **11.07.2018**
(21) Application number: 15715469.1
(22) Date of filing: 06.03.2015
(51) Int. Cl.: A01J 5/003, A01J 5/007, A01J 9/00

(54) **DAIRY FARM SYSTEM**
MILCHWIRTSCHAFTSBETRIEBSSYSTEM
SYSTÈME DE FERME LAITIÈRE

(30) Priority: 19.03.2014 NL 2012473; 13.06.2014 NL 1040846
(43) Date of publication of application: 25.01.2017
(73) Proprietor: Lely Patent N.V., 3147 PB Maassluis (NL)
(72) Inventor: ÖZMEN, Dogman, 3147 PA Maassluis (NL); VAN WATERSCHOOT, Paul, 3147 PA Maassluis (NL); MOSTERT, Gerard, 3147 PB Maassluis (NL)
(74) Representative: Octrooibureau Van der Lely N.V.
(86) International application number: PCT/NL2015/050140
(87) International publication number: WO 2015/142165

(56) References cited:
- EP-A1- 1 523 878
- WO-A1-00/74472
- DE-A1- 2 623 499

## Description

The present invention relates to a dairy farm system. Dairy farm systems are used on dairy farms to obtain milk from dairy animals, see e.g. WO 00/74472 A1. A dairy farm system generally comprises a non-mobile milking system with a milking machine, and in particular a milking robot, for performing a milking on a dairy animal, a milk receptacle that is arranged to receive, when connected to the milking device, milk from the milking, and a central milk tank, separate from the milking device, for storing milk from a plurality of milkings. To transport milk from the milk receptacle, often also called a milk jar, to the milk tank, there is provided a milkline and a milk pump. During milking, the milk from the milking is collected in the milk jar. When the milked milk is determined to be fit for human consumption, the milk is pumped to the milk tank, otherwise to a separate tank for rejected milk, or to a sewer or the like. A known problem is that transferring milk from the milking system to the milk tank gives rise to mechanical load on the milk, which in turn often leads to damaged fat globules, and a (too) high free fatty acids concentration.

It is an object of the present invention to improve the milk quality of the known dairy system, with a similar efficiency and capacity of the dairy system.

This object is achieved with a dairy system according to claim 1. The inventor has realised that having the dairy
system automatically move the milk receptacle as a whole to the milk tank provides in principle the least mechanical load on the milk, thus allowing an optimum quality. The milk is separate for each milking, so no mixing of fit and unfit milk for consumption is possible in the milk receptacle, and the milk can be cooled immediately.

Another advantage is that there is no long milk line, extending between the milking machines and the milk tank, to be cleaned e.g. three times a day. This is incidentally what is meant with the central milk tank being "separate" from the milking system: there is no longer a direct fluid connection between the two. No longer having such a long milk line to the milk tank saves a lot of energy and water, and also prevents a lot of downtime, as cleaning of the milking system is now much faster. Furthermore, since there is no longer any cleaning of a long milk line, it also saves a lot of water, energy and chemicals.

It is noted that document EP1523878 discloses a freely movable teat cup carrier with milking means and a milk storage vessel. In one embodiment, the teat cup carrier may move to a milk collecting tank, or the milk storage vessel is exchangeable and may be transported for example as a whole to a milk factory. Although this also limits damage to the milk, this known device has a low capacity, or at least still requires a lot of manual work, since it is not efficient to have the milking device as a whole move to the milk tank, which is the case for the known teat cup carrier. In any practical barn environment, the milk tank is often quite far away from the milking device. When moving all of the milking device back and forth, a lot of valuable time is lost that cannot be used for milking, which is the primary task of the milking device. This alone is a reason not to combine this technology with that of a non-mobile milking system. It is neither efficient to have a multitude of milking devices that are idle because they are being moved around. Moreover, the moving of the milking means themselves (vacuum pump, teat cups and robot arm, teat detection system and so on) requires a lot of additional energy, which is wasted if moving around those means does not serve a purpose. Furthermore, as in another disclosed embodiment, moving in a non-disclosed way an obviously large number of milk collecting vessels to a milk factory is neither a desirable efficient solution to the problem. Note that milk has to be cooled (such as EC Regulation No 1662/2006: Milk must be cooled immediately to not more than 8 °C in the case of daily collection, or not more than 6 °C if collection is not daily.) Therefore, it is not feasible to store more than a single milking in the milk collection vessel, unless the milking system would have cooling means on-board. Moreover, mixing milk from multiple milkings is undesirable since it is possible that a single milking makes the milk from all other milkings unfit for consumption, which would mean a lot of loss. Thus the milk collecting vessel would have to be exchanged after each milking anyway, which requires a lot of labour. No way of or means for doing so is given in the cited document.

Contrarily, the present invention uses a non-mobile milking system, as is per se known in the field. Having an automatic transport device for disconnecting the milk receptacle after each milking and transporting in principle only the milk receptacle to the milk tank achieves a gentle milk transport, a minimum of energy and resources for the milk transport and full availability of the milking system for milking. The receptacle to be moved automatically is itself free from automatic milking means.

Further embodiments of the invention will be described hereinbelow.

In embodiments, the non-mobile milking system comprises one or more milk stands, in particular one or a plurality of milking boxes, such as a rotary milking parlour or a herringbone milking stall. When the dairy farm system comprises one, or in particular more milk stands, the milk tank will often be far away from the milking system. Another reason for this is that the milk tank must be sited in a clean area, as the milk storage room is considered a food storage area. Thus, the milk line from milk receptacle to the milk tank, in prior art dairy farm systems, will often be very long. Contrarily, in the present invention such a long milk line is not necessary, or not even present, and a great advantage is achieved by having the removable milk receptacle and the automatic handling system for moving the milk receptacle to the milk tank. Examples of a dairy farm system having such a plurality of milking boxes are a twin stand milking robot, a herring bone milking stall or advantageously a rotary milking parlour. It is noted that each individual milking machine on the rotary milking parlour floor will of course move in a circle. However, the milking system as a whole is non-mobile.

In embodiments, the milk receptacle and the central milk tank are removably fluidly connectible. In such embodiments, and after moving the milk receptacle to the milking tank, the milk can flow from the milk receptacle to the milk tank via a coupling to said milk tank. Said coupling may for example be a releasable quick connector, comparable to the known garden hose connectors. In this way, a quick fluid connection can be made between the milk receptacle and the milk tank, which connection is easily removable. It is noted that it is not necessary for there to be a removable fluid connection, since it is also possible to empty the milk receptacle into the milk tank, e.g. by tilting the milk receptacle or the like.

According to the invention, at least one of the handling system, the milk receptacle and the central milk tank is arranged to transfer the milk from the milk receptacle to the central milk tank. In embodiments, at least one of the milk receptacle and the central milk tank comprises a pump arranged to pump the milk from the milk receptacle into the central milk tank, in particular via the fluid connection. Alternatively or additionally, the handling system, the milk receptacle and/or the central milk tank may comprise a tilting device, that is arranged to tilt the milk receptacle, such that the milk from the milk receptacle will flow towards and into the central milk tank under the influence of gravity, again in particular via the fluid connection. Advantageously, the handling system is arranged to bring the milk receptacle to a position at the level of at least that of a supply opening into the central milk tank, such as at the top of the milk tank. In that way, the tilting device need not tilt the milk receptacle to a much higher level. If the central milk tank further comprises a supply device with a supply opening higher than the central milk tank itself, it may be sufficient for the milk receptacle to couple with the supply device and let the milk run out of the receptacle into the central milk tank under the influence of gravity.

In embodiments, the dairy farm system further comprises at least one further milk receptacle that is removably fluidly connectible to the milking system and is arranged to receive, when connected to the milking system, milk from the milking, and that in particular is removably fluidly connectible to the central milk tank. In such embodiments, there are a plurality of milk receptacles that may each be connected to the milking system, consecutively or even in parallel. An advantageous use of such a plurality of milk receptacles is to milk a first cow and collect the milk in a first milk receptacle, while milking a further cow and collecting her milk in a further milk receptacle. During milking of the further cow, the milk of the first cow, in the first milk receptacle, is moved to the milk tank by means of the milk handling system. Thereby, no time is lost. Any number of milk receptacles is possible, while it is advantageous to have a relatively higher number of milk receptacles if a relatively longer milk line is to be replace. Furthermore, if the handling system is able to transport the milk receptacle to the milk tank quickly, then a relatively lower number of milk receptacles will suffice. Note that it is the receptacle as a whole that it is transported, and not the milk by exerting a force or pressure thereon. Thereby, much higher transport speeds are possible without causing fat globules to break, or in any other way jeopardizing the milk quality.

The handling system comprises a displaceable carrier for carrying the milk receptacle and for moving the milk receptacle to the central milk tank. The carrier may be provided with any means that is suitable for carrying and moving the milk receptacle, which does need not be provided on the milk receptacle itself. This allows a dedicated design of the carrier and of the milk receptacle, as their functions are different, *viz.* transport, and milk collection, respectively. It will be clear that it is also possible to provide a plurality of displaceable carriers, in such a way that there is always a carrier available to carry a milk receptacle to the milk tank or vice versa.

In embodiments, the carrier comprises a gripping device for gripping the milk receptacle. Such a gripping device may grip the milk receptacle as a whole, for example by having two or more arms exert a pressure on the milk receptacle on opposite side thereof. Alternatively or additionally, the gripping device may grip a dedicated portion of the milk receptacle, such as a protruding plate, or be embodied in the form of a hook or the like, such as to grip a ring or counterhook or the like on the milk receptacle. Other embodiments of a gripping device having the same functionality are not excluded. The handling system comprises a, preferably branched, guide rail system arranged between the milking system and the central milk tank, wherein the carrier is displaceable along the guide rail system. In this embodiment, there is a system for moving the milk receptacles, or the carrier(s), in the form of a rail system. Such a rail system may be provided with any known propulsion means for the milk receptacles and/or carriers, such as endless chains etc. Furthermore, no navigation means is necessary. By providing a branched guide rail system, a compact and quick system to guide the milk receptacle to a plurality of destinations is provided, such as a milk tank for consumption and a sewer for milk that is not fit for consumption, and/or a calf milk tank. Note that the guide rail system and the carrier or receptacle may be mechanically connected, such as a train and rails, or the guide rail system may be a navigational guidance for a noncoupled carrier or receptacle. The carrier comprises a vehicle with a propulsion device, in particular wheels or continuous tracks, which vehicle is arranged to move autonomously between the milking system and the milk tank. These embodiments are advantageous because of a vehicle's inherent flexibility and movability. Depending on a desired destination, the vehicle will move there autonomously by means of its own propulsion device and if need be other means, such as a navigation device on-board. Note however that the vehicle may also be controlled by some external means such as a receiver (Bluetooth or other) for external navigation instructions or one or more strips on the floor to be followed, or the guide rail system mentioned above. Alternative means are also possible to move and navigate the vehicle around. All navigation means are in principle possible, such as gps, gyroscopes, radio beacons and so on. Another advantage of a vehicle is that, in case of extension of the system, it is very easy for the vehicle to go to a new part of the dairy farm system, such as a new milking machine. Furthermore, having a propulsion means on board has the advantage that the vehicle can climb up to a level suitable for transferring milk into a supply opening of the central milk tank by means of gravity. As described above, tilting the milk receptacle would then suffice, which is easier when the receptacle, or the vehicle together with the recpetacle, is already at a desired height.

In embodiments, the dairy farm system comprises a controller for controlling the movement of the at least one receptacle, in particular the at least one carrier. The controller may control the navigation means, in that it is arranged to provide navigation instructions to the navigation means, for example based on a destination of the receptacle. In turn, the destination may be based on measured milk parameters or management information or the like. The controller may also be a distributed controller, such as an embodiment in which each vehicle has a controller that is in connection with the controller of the other vehicles and possibly with an external control unit, such as a management system for a milking device or the like. Based on information from the other controllers and possibly from the management system, the controller of the vehicle can not only determine its destination and its route, but also take into account the position and route of the other vehicles, such as to prevent collisions, traffic jams et cetera.

In embodiments, the carrier and the milk receptacle are fixedly connected. In such embodiments, the carrier and the milk receptacle form one unit. This dedicated mobile milk receptacle allows a very reliable and safe milk transport, since there is no chance of switching milk receptacles between carriers. Thus the chance that milk that is not fit for consumption ends up in the milk tank is low.

In embodiments, the milk receptacle is removable from the carrier, and the handling system comprises a loader-unloader system for automatically loading and unloading of the milk receptacle onto/from the carrier. In this alternative, or additional, embodiment, the carrier picks up a milk receptacle with milk from a milking, and carries this to the milk tank or some other place. This allows a flexible use of the carrier, since the milk receptacle may also be used in various other positions. Examples thereof are a cleaning position or at repair site. In other words, fewer carriers than there are milk receptacles may still provide a maximum capacity. The loader-unloader system may comprise any known purpose-fit system, such as a gripping system described herein above, a magnetic or other docking system and so on. It may comprise a tilting system, pump means for pumping the milk from the milk receptacle to the milk tank and so on.

In embodiments, the dairy farm system comprises a milk receptacle production unit, arranged to produce said milk receptacle from stock material, in particular comprising a plastic material stock and a receptacle separator, more in particular a knife arranged to cut a portion from the stock material and a sealing means arranged to seal the cut portion into a milk bag. These embodiments allow a very hygienic set-up, and also do away with the need for the milk receptacle to be moved back to a milking machine. In these embodiments, the milk receptacle is made from stock material on the spot. The milk receptacle production unit may comprise for example a long tube of plastic material, an optional blower for blowing up the stock material to a desired volume, and sealing means to seal a part of the stock material into the desired shape for the milk receptacle. Herein, a knife or the like may be used to cut the desired portion from the stock material of plastics. Note that a connection portion is also preferably provided in the milk receptacle, for connection to the milking system and/or to a blower for inflating the tube material. It is possible to provide such a connection portion already in the stock material, e.g. in the form of a reel of ready-made receptacles that only need to be inflated. Furthermore, inflating the receptacle is only an option, as it may also be filled simply by the milk flowing into it.

In embodiments, the dairy farm system is provided with a quality control device for attributing a quality indication to the milk of the milking. These embodiments may make use of any known milk quality sensor that is known in the field, such as a conductivity sensor, a color analysis sensor or the like. For example, if a conductivity sensor senses a milk conductivity that is higher than a threshold, it is concluded that the milk is not fit for human consumption. A corresponding quality indication may then be made, for example in the management system, that decides on a route to be followed by the milk receptacle (or carrier or the like). It is likewise possible to consider a control system of the milking system itself as the quality control device. For example, if a dairy animal is treated with antibiotics, its milk is unsuitable for human consumption. The quality indication can then be made in the milking system control system, such as a managament system, without there being any sensor or the like involved. Similarly, if a dairy animal produces milk with a specific component, or with a relatively high percentage thereof, that may lead to a quality indication in the control or management system, without the need for any milk quality sensor.

In embodiments, the dairy farm system further comprises a marker device for marking the receptacle with information regarding the attributed quality indication, in particular said quality indication. In such embodiments, at least some code for identifying the milk and/or the cow is preferably marked on the milk receptacle. This allows tracking of the milk receptacle with the milk from a milking. More in particular, if furthermore the attributed quality indication is marked on the receptacle, a check can be performed on the receptacle by the receiving side, such as the milk tank. This reduces the chance that unfit milk is supplied to the milk tank, or that consumption milk is provided to the sewer, or the like. Also, in case of failure of a carrier, of a power failure etc., the milk can still be contributed to the milk tank, the sewer etc.

In embodiments, the dairy farm system further comprises at least one additional milk destination, and the handling system is arranged to move the milk receptacle to either the milk tank or one of the at least one additional destination in dependence of said quality indication. In these embodiments, as briefly indicated above, the milk may be distributed according to e.g. quality or other requirements, to the milk tank for consumption milk, a sewer for milk from infected cows or antibiotics cows etc., a colostrum tank for feeding calves, for special purpose milk (for example with some specific milk component) and so on. A corresponding number of sites for supplying the milk from the milk receptacles to is preferably provided. The handling system, or a control system for controlling the handling system, is arranged to move the milk receptacle (or the carrier carrying the milk receptacle) to any of the indicated destinations in dependence of a quality indication. Note that a quality indication may alternatively also be made only in the control system.

In embodiments, the dairy farm system comprises one or more additional milk tanks, each for storing milk from a plurality of milkings, in particular each intended for human consumption. The dairy farm system, and in particular the handling system, is then arranged to move a receptacle to one of the central milk tank, one of the additional milk tanks or another destination for non-consumption milk on the basis of the quality indication. A great advantage of such a system derives from the fact that milk is not transported through a long milk line. In such a long milk line, milk from different (subsequent) milkings will inevitably be mixed. Therefore, it is not possible to separate different qualities, such as standard milk for drinking, or top quality for cheese making, or milk with special contents such as from a genetically altered/different cow or the like. Of course, such a separation system could be made directly behind a milk jar or the like, but that requires very much more milk line length, at high cost, and in addition that is needed for each milking device, such as up to a few dozen for bigger dairy farms. All this is not necessary with the present invention's system, in which each milking's milk can be sent separately to a specific destination, based on the specific quality of the milk in that milking, without any additional milk lines.

An important example in the above is when the destinations and quality indication comprise so-called A1-milk and A2-milk tanks and indications. A1 and A2 refer to milk containing A1, A2 beta-casein, respectively. A2 milk is milk that is suitable for many people with milk intolerance. Whether a dairy animal (cow) produces A1 and/or A2 milk is genetically determined, and thus does not require permanent checking of the milk. Thus, in a particular embodiment, the central milk tank and the at least one additional milk destination comprise at least one tank for A2-milk and at least one other tank for other consumption milk, wherein the quality control device is arranged to attribute an A2-milk quality indication to milk from one or more selected dairy animals, wherein the dairy farm system is arranged to transport milk with the A2-milk quality indication to the A2-milk tank and consumption milk without the A2-milk quality indication to the at least one other tank for other consumption milk. Of course, if a dairy animal has been treated with antibiotics, suffers from mastitis, yields colostrum or otherwise unfit milk, such a negative quality indication overrules the A2-milk quality indication.

In embodiments, the quality control device comprises one or more milk quality sensors, that is/are arranged on the receptacle and for determining a quality parameter value of the milk in the receptacle. An advantage of this set-up is that right after milking, or even during milking, the sensor(s) can start determining the value(s), but they may take more time to do so then when in a customary milking system. After all, in the latter, milk must be tested before sending it through the milk conduit system, for which there is not much time if the milking device is not to be blocked for a next dairy animal. In the present invention, the milk is carried in a separate receptacle, and measuring may take all the way from the milking station to the milk tank, or other destination. For example, the one or more milk quality sensors comprise a conductivity sensor, an optical sensor for detemining colour (blood-related or the like), or SCC. In particular an SCC sensor according to the California Mastitis Test (CMT) takes a relatively long measuring time, but may be important to decide where the milk should go. Advantageously, at least one milk quality sensor, and in particular a SCC sensor, comprises a sampling device, arranged to sample the receptacle's milk, such as with a syringe or a sample bypass between the connector and the milk receptacle. Therefore, in particular, the quality control device is arranged to attribute a quality indication on the basis of the measured quality parameter value(s). In particular, the handling system is then arranged to guide the receptacle to one of either the milk tank or one of the at least one additional destination in dependence of said quality indication. In particular, the at least one milk quality sensors is provided on a vehicle on the vehicle, as this allows to test each receptacle's milk without requiring each receptacle to have its own sensor(s).

Based on the measured milk quality, measures may be taken to separate milk into various qualities, such as beestings, consumption milk and milk from infected cows. In particular, the dairy farm system is arranged to separate milk from different quarters, on the basis of the measured quality parameter values for one or more quarters. In embodiments, the handling system is arranged to instruct the milking machine to milk only a desired subset of the quarters of the animal. In this way, the handling system may collect e.g. consumption milk from (say) three healthy quarters in the receptacle. Then, a separate receptacle may be used for collecting the milk from the infected quarter. In this way, mixing of fit milk and unfit milk can be reliably prevented.

In embodiments, the dairy farm system is further provided with a cleaning system for cleaning and/or disinfecting the milk receptacle. In these embodiments, such a cleaning system allows for cleaning and/or disinfecting the milk receptacle, e.g. by washing the receptacle with rinsing fluid, by supplying steam or some other disinfectant to the milk receptacle etc., all according to any known cleaning and/or disinfecting matter known in the art. It is noted that the cleaning system need not be provided at the side of the milking system, but may be provided elsewhere, e.g. near the milk tank. This allows cleaning and/or disinfecting of the milk receptacle shortly after the milk receptacle has supplied its milk to the milk tank. Furthermore, such cleaning and/or disinfecting of the milk receptacle will only be required for a multiple use milk receptacle.

The invention will now be elucidated by means of a number of exemplary and nonlimiting embodiments, as shown in the drawings, and in which:
- Figure 1 diagrammatically shows a top view of a prior art dairy farm system,
- Figure 2 very diagrammatically shows a dairy farm system 1 according to the invention,
- Figure 3 shows a part of another dairy farm system according the invention, in a diagrammatic side view,
- Figure 4 very diagrammatically shows another dairy farm system 1' according to the invention in a top view,
- Figure 5 diagrammatically shows a milk receptacle production unit 60, and
- Figure 6 very diagrammatically shows a milk receptacle for use in the dairy farm system according to the invention, in a diagrammatic side view.

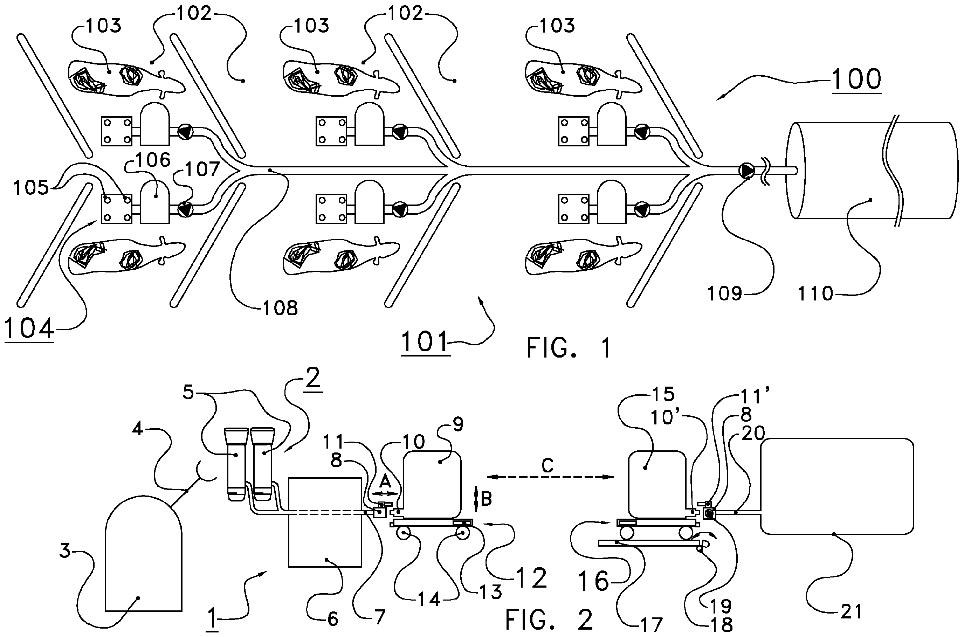

Figure 1 diagrammatically shows a top view of a prior art dairy farm system, designated by reference numeral 100. It comprises a herring bone milking stall 101, with six milking places 102 for milking dairy animals 103, and has six milking machines 104, each with teat cups 105, a milk jar 106 and a milk pump 107. The milking machines 104 supply milk to the central milk line 108. Central milk pump 109 pumps the milk to the central milk tank 110.

The drawing is not to scale, and the part of the central milk line 108 that has been left out may be up to several hundred meters long. In such a case, the pressure exerted by the central milk pump 109 as well as the friction and turbulence due to the resistance in the central milk line 108 may deteriorate the milk quality before the milk arrives in the central milk tank 110.

Figure 2 very diagrammatically shows a dairy farm system 1 according to the invention, comprising a milking system 2 with a robot 3 with a robot arm 4, teat cups 5 of a milking machine 6 with a milk line 7 and a first connector 8. A milk receptacle is designated by 9 and has a second connector 10. A connector controller is designated by 11 and controls the removable connection between the first and second connectors in the direction of arrow A. The receptacle 9 is positioned on a vehicle 12 with a vehicle controller 13 and wheels 14.

A further milk receptacle 15 on a further vehicle 16 has been transported in the direction of one of arrows C and is now positioned on top of a tiltable platform 17, that is tiltable around a hinge 18. Here, as throughout all of the drawings of this application, similar parts have been denoted by the same or (double) primed reference numerals. Furthermore, 19 designates a pump, and 20 designates a flexible milk line to the central milk tank 21.

The dairy farm system as shown comprises a milking system 2 that has one or more milking machines 6, although only one is shown here. Furthermore, although the teat cups 5 may be connected to a dairy animal by hand, in Figure 2, this is performed by means of the robot 3 with a robot arm 4. Examples of such milking robots are the Lely Astronaut™ and DeLaval VMS™ milking robots.

The milking machine 6 comprises the usual parts, such as a milking vacuum pump, a pulsator vacuum pump and a pulsator, none of which is shown here in any further detail, as they do not relate to the heart of the invention. As is ususal, the milking machine 6 is used to extract milk from the dairy animal via the teat cups 5 and to supply the milk to the milk line 7, such as by means of a non-shown pump. The milk line 7 ends in a first connector 8 onto which a second connector 10 of the milk receptacle 9 may be removably connected. The connecting and disconnecting is controllable by means of the connector controller 11, for example comprising a pusher element for pushing the receptacle, and in particular the second connector 10 thereof, away from the first connector 8. Automatic connectors are known per se, and may for example be derived from garden hose connectors or the like.

In this embodiment, the receptacle 9 is positioned on top of a vehicle 12. The vehicle 12 has a vehicle controller 13, for example comprising navigation means and a controller for controlling a non-shown wheel motor for the wheels 14, for propulsion of the vehicle.

After this connecting by means of the connector controller 11, the vehicle 12 with the milk receptacle 9 that is now filled with milk can move or be moved away from the milking machine 6 and towards another destination. In Figure 2, such a destination has been reached by the further milk receptacle 15 on the further vehicle 16. This vehicle is now in a position for supplying its milk to the central milk tank. Thereto, first of all the connection between the corresponding first and second connectors 8' and 10' is made under the control of the connector controller 11'. Now, there is a fluid connection between the further milk receptacle 15 and the central milk tank 21. In order to supply the milk from the further milk receptacle 15, the tiltable platform 17 may be tilted around the hinge 18 in the direction of the arrow D. Then, the milk from the further milk receptacle 15 will flow to the central milk tank 21 under the influence of gravity. It is also possible to provide the platform at a higher level, such as on top of or near the top of the central milk tank 110. In fact, it then need not be tiltable, as the milk may flow out of the receptacle into the tank 110 under the influence of gravity.

Alternatively, or additionally, and preferably because of better flow control, the milk may be pumped from the further milk receptacle 15 to the central milk tank by means of the pump 19. Note that in the former case, the milk line 20 should be flexible, which need not be so in the latter case.

The milk receptacle 9 is shown to be removable in the direction of the arrow B. Either by hand or by means of a non-shown device, the milk receptacle 9 may be lifted off the vehicle 12, for example in order to be replaced or the like.

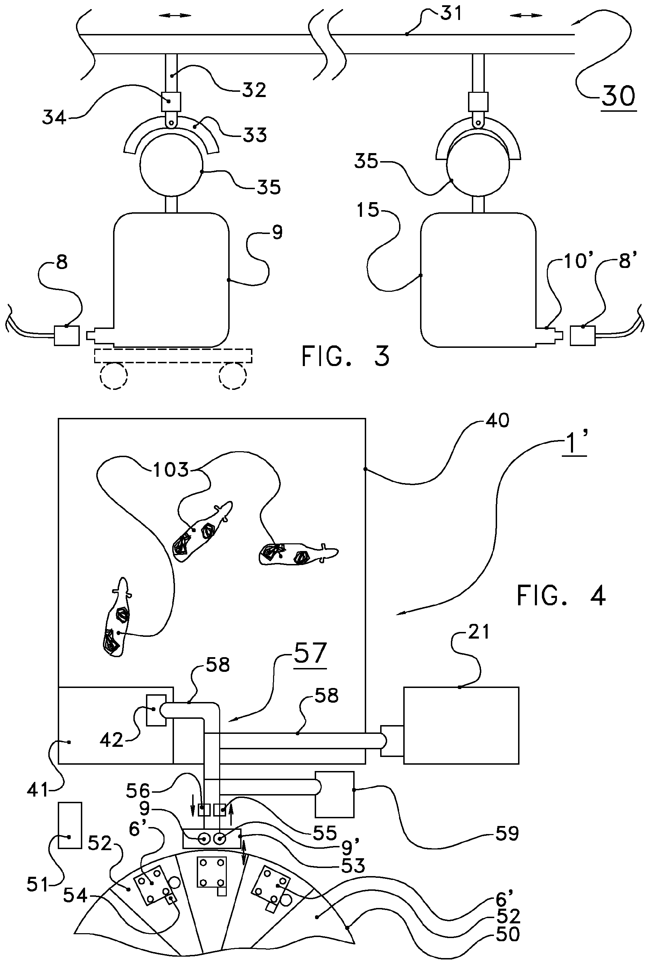

Figure 3 shows a part of another dairy farm system according the invention, in a diagrammatic side view. The system comprises a guide rail system 30 with a guide rail 31 and carriages 32, each with a gripper 33 and a gripper controller 34. The milk receptacles 9, 15 have a protrusion 35 to be gripped by the gripper 33. Shown in dashed lines is a vehicle onto which the milk receptacle 9 may be positioned. However, the carriage 32 may also position the milk receptacle 9 on a non-moving platform or the ground.

With the guide rail system 30 as shown, the milk receptacles 9 may be positioned where needed, such as at a connector 8 of a (non-shown) milking machine or milking system. There, the milk receptacle 9 may be filled with milk. After filling, the gripper 33 grips the protrusion 35 and moves the filled milk receptacle 9 to a different position, such as the position now taken in by another milk receptacle 15. This other milk receptacle 15 may be connected to another first connector 8', such as of a central milk tank (not shown here). It can then supply its milk to the central milk tank or the like.

Figure 4 very diagrammatically shows another dairy farm system 1' according to the invention in a top view.

The dairy farm system 1' comprises a rotary platform 50 and a platform controller 51. The rotary platform 50 has milking places 52 with a milking machine 6'. Each milking machine 6' has a quality meter 54.

A handling system, or loader-unloader system, is designated by reference numeral 53, a marking station is designated by 55 and a cleaning station is designated by 56.

The dairy farm system 1' further comprises a guiding system 57 with branches 58, such as to a sewer 59 and a central milk tank 21, as well as to a calves pen 41 with a calf drinking station 42.

Dairy animals such as cows are milked on the rotary platform 50 by means of the milking machines 6'. When a milking place 52 is positioned near the handling system 53, a new milk receptacle 9 may be positioned on the milking place 52, in fluid connection with the milking machine 6', and a full milk receptacle 9' may be taken from the milking place.

The milk that has been milked by the milking machine 6' has undergone a quality check by means of the quality meter 54. This meter may comprise one or more meter devices, such as a milk conductivity meter, a milk color meter, a SCC meter and so on. Relevant information and data may be stored in the controller 51 and may also be marked on the filled milk receptacles 9'. Thereto, the marking station 55 may imprint a code or even the information itself onto the milk receptacle 9'. This may prevent that the contents of a milk receptacle 9' becomes worthless because its quality can no longer be ensured. If this quality, or a code that is connected to that quality, is imprinted on the milk receptacle 9', even after a disturbance, such as a mains black-out or the like, the contents may be linked to the necessary information.

In a non-shown option, the milk receptacle 9', or similarly the vehicle for the receptacle 9, may be provided with at least one quality meter (or sensor) for measuring a milk quality parameter value, such as a somatic cell counter sensor. Now, the receptacle 9', or the vehicle 12 with the receptacle 9, can measure one or more milk quality parameters underway, in order to determine where the receptacle's milk should be transferred to. The at least one quality meter (or sensor) may comprise a sampler, such as a syringe, or a sample bypass connected to the second connector or at any other desirable position.

On the basis of the quality as determined by means of the quality meter 54, the milk receptacles 9' will be moved along the guiding system 57 and one of its branches 58 to a desired destination. One desired destination is the sewer 59, which may be selected for non-useful milk, such as mastitis milk or antibiotics milk. The milk is simply dumped into the sewer, and the empty milk receptacle will return.

Another destination is the central milk tank 21, for which a similar system has been shown in Figure 2 or 3 may be used.

Another possible destination is a calves pen 41 in which calves are held. In particular young calves should advantageously drink biestings or colostrum. Such milk is considered unfit for human consumption, but provides health benefits to calves. Thereto, a milk receptacle filled with colostrum is guided towards the calve drinking station 42, into which the colostrum will be supplied, and will be made available for drinking by the calves.

Another possible destination, not shown here, comprises one or more special milk tanks, in which consumption milk with a special quality may be stored, for example milk with a very low SCC number, for cheesemaking, or milk from one or more special cows that produce a special enzyme or the like. Note that such milk is not diluted or mixed in a long milk line, but may be brought to a separate tank without mixing at all.

In all cases, the now empty milk receptacle 9 will return in the direction of the handling system 53, but before arriving there will pass through the cleaning station 56. There, the milk receptacle will be cleaned, for example by connecting to a cleaning fluid supply. The milk receptacle will then be washed by filling with cleaning fluid and emptying it again. After cleaning, the milk receptacle will be ready for another use and will arrive at the handling system 53.

In the dairy farm system 1' as shown, the guiding system need not be a guide rail system as shown in Figure 3, but could also comprise a track for vehicles, or a set of beacons or other devices that can be followed by a device and a detector, such as a buried strip, or even comprise routes programmed into a navigation system of a vehicle.

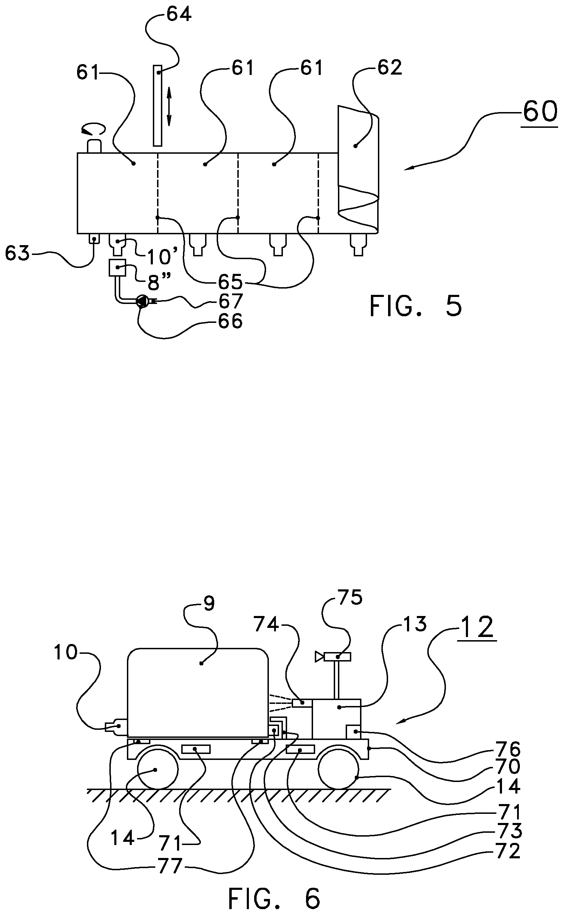

Figure 5 diagrammatically shows a milk receptacle production unit 60. Here, empty milk receptacles 61 are connected to each other in a stock 62, that is moved by means of a conveyor roller 63. A movable knife 64 cuts along lines 65 for cutting. Reference numeral 66 designates a pump and numeral 67 an air inlet.

The stock 62 of empty receptacles 61, each with a connector 10', is transported and provided one by one, by means of the conveyor roller 63. When another milk receptacle is needed, the knife 64 cuts off the foremost empty receptacle 61 along a cutting line 65. Then the empty receptacle will be inflated by means of connecting its connector 10' to the counter connector 8" and pumping air into the receptacle 61 by means of the pump 66, via air inlet 67. Now, a new milk receptacle is ready for use.

Figure 6 very diagrammatically shows a milk receptacle for use in the dairy farm system according to the invention, in a diagrammatic side view. The receptacle has a milk receptacle 9 on a vehicle 12. The vehicle 12 has a frame 70 with wheels 14 and electro motors 71. The milk receptacle 9 has a locking protrusion 72, while the vehicle 12 has a locking device 73, for locking the milk receptacle 9 onto the vehicle 12. The vehicle 12 also has a vehicle controller 13 and a marking nozzle 74 and a camera 75. Furthermore, a communication device is designated by 76 and load cells by 77. The milk receptacle 9 is removable connected on the vehicle 12, and can be locked by means of the locking protrusion 72 and the locking device 73.

The marking nozzle 74 is arranged to imprint information on the milk receptacle 9. Thereto, the marking nozzle 74 may for example be arranged as a set of printing nozzles. The information to be printed on the milk receptacle 9 may be of different sources, such as received by means of the communication device 76, and derived from a quality meter or the like. The information may also be (partly) processed by means of the vehicle controller 13. It is also possible to generate information on the vehicle 12 itself, such as by means of the load cells 77, arranged to determine the weight of the milk in the milk receptacle 9.

The vehicle 12 furthermore comprises a camera 75. This camera may be arranged for navigational purposes, such a by means of object recognition, or route recognition. Furthermore, the camera 75 may obtain images that are used by the vehicle controller 13 for connecting and disconnecting the milk receptacle 9 from a milking device or the like. Information as to the destination of the vehicle and the milk receptacle 9 carried by it may also be received by means of the communication device 76.

## Claims

1. Dairy farm system comprising:
- a non-mobile milking system (2) with a milking machine (6), and in particular a milking robot (3), for performing a milking on a dairy animal,
- a milk receptacle (9) that is removably fluidly connectible to the milking system and is arranged to receive, when connected to the milking system, milk from the milking,
- a central milk tank (21), separate from the milking system, for storing milk from a plurality of milkings,
- an automatic handling system for handling the milk receptacle, and arranged to disconnect the milk receptacle from the milking system after each milking and to move the milk receptacle from the milking system to the central milk tank,
wherein at least one of the handling system, the milk receptacle and the central milk tank is arranged to transfer the milk from the milk receptacle to the central milk tank, wherein the handling system comprises a displaceable carrier for carrying the milk receptacle and for moving the milk receptacle to the central milk tank,
wherein
the handling system comprises a, preferably branched, guide rail system (30) arranged between the milking system and the central milk tank, wherein the carrier is displaceable along the guide rail system,
and/or
wherein the carrier comprises a vehicle (12) with propulsion device, in particular wheels or continuous tracks, which vehicle is arranged to move autonomously between the milking system and the milk tank.

2. Dairy farm system according to claim 1, wherein the non-mobile milking system comprises one or more milk stands, in particular one or a plurality of milking boxes, such as a rotary milking parlour or a herringbone milking stall.

3. Dairy farm system according to any preceding claim, wherein the milk receptacle and the central milk tank are removably fluidly connectible.

4. Dairy farm system according to any preceding claim, wherein at least one of the milk receptacle and the central milk tank comprises a pump arranged to pump the milk from the milk receptacle into the central milk tank, in particular via the fluid connection.

5. Dairy farm system according to any preceding claim, further comprising at least one further milk receptacle that is removably fluidly connectible to the milking device and is arranged to receive, when connected to the milking device, milk from the milking, and that is removably fluidly connectible to the central milk tank.

6. Dairy farm system according to any preceding claim, wherein the carrier comprises a gripping device for gripping the milk receptacle.

7. Dairy farm system according to any one of the preceding claims, wherein the carrier and the milk receptacle are fixedly connected.

8. Dairy farm system according to any one of the preceding claims, wherein the milk receptacle is removable from the carrier, and wherein the handling system comprises a loader-unloader system for automatically loading and unloading of the milk receptacle onto/from the carrier.

9. Dairy farm system according to any one of the preceding claims, comprising a milk receptacle production unit, arranged to produce said milk receptacle from stock material, in particular comprising a plastic material stock and a receptacle separator, more in particular a knife arranged to cut a portion from the stock material and a sealing means arranged to seal the cut portion into a milk bag.

10. Dairy farm system according to any one of the preceding claims, wherein the dairy farm system is provided with a quality control device for attributing a quality indication to the milk of the milking.

11. Dairy farm system according to claim 10, further comprising a marker device for marking the receptacle with information regarding the attributed quality indication, in particular said quality indication.

12. Dairy farm system according to claim 10 or 11, further comprising at least one additional milk destination, and wherein the handling system is arranged to move the milk receptacle to either the milk tank or one of the at least one additional destination in dependence of said quality indication.

13. Dairy farm system according to claim 12, wherein the central milk tank and the at least one additional milk destination comprise at least one tank for A2-milk and at least one other tank for other consumption milk, wherein the quality control device is arranged to attribute an A2-milk quality indication to milk from one or more selected dairy animals, wherein the dairy farm system is arranged to transport milk with the A2-milk quality indication to the A2-milk tank and consumption milk without the A2-milk quality indication to the at least one other tank for other consumption milk.

14. Dairy farm system according to any one of claims 10-13, wherein the quality control device comprises one or more milk quality sensors, that is/are arranged on the receptacle, in particular on the vehicle, and for determining a quality parameter value of the milk in the receptacle.

15. Dairy farm system according to any one of the preceding claims, wherein the dairy farm system is further provided with a cleaning system for cleaning and/or disinfecting the milk receptacle.

## Patentansprüche

1. System für einen Milchwirtschaftsbetrieb, umfassend:
- ein nicht mobiles Melksystem (2) mit einer Melkmaschine (6), und insbesondere einem Melkroboter (3), zum Durchführen einer Melkung eines Milchtiers,
- einen Milchbehälter (9), der abnehmbar fluidisch mit dem Melksystem verbindbar ist und dazu ausgelegt ist, wenn er mit dem Melksystem verbunden ist, Milch von der Melkung aufzunehmen,
- einen vom Melksystem separaten zentralen Milchtank (21) zum Lagern von Milch aus mehreren Melkungen,
- ein automatisches Handhabungssystem zum Handhaben des Milchbehälters, das dazu ausgelegt ist, den Milchbehälter nach jeder Melkung vom Melksystem zu trennen und den Milchbehälter vom Melksystem zum zentralen Milchtank zu bewegen,
wobei wenigstens eines von dem Handhabungssystem, dem Milchbehälter und dem zentralen Milchtank dazu ausgelegt ist, die Milch aus dem Milchbehälter zum zentralen Milchtank zu transferieren, wobei das Handhabungssystem einen verschiebbaren Träger zum Tragen des Milchbehälters und zum Bewegen des Milchbehälters zum zentralen Milchtank umfasst,
wobei das Handhabungssystem ein, vorzugsweise verzweigtes, zwischen dem Melksystem und dem zentralen Milchtank angeordnetes Führungsschienensystem (30) umfasst, wobei der Träger entlang des Führungsschienensystems verschiebbar ist,
und/oder
wobei der Träger ein Fahrzeug (12) mit einer Antriebsvorrichtung, insbesondere Rädern oder Gleisketten umfasst, wobei das Fahrzeug ausgelegt ist, sich autonom zwischen dem Melksystem und dem Milchtank zu bewegen.

2. System für einen Milchwirtschaftsbetrieb gemäß Anspruch 1, wobei das nicht mobile Melksystem ein oder mehrere Melkstände umfasst, insbesondere eine oder mehrere Melkboxen, wie einen Melkkarussell-Melkstand oder einen Fischgrätenmelkplatz.

3. System für einen Milchwirtschaftsbetrieb gemäß einem der vorhergehenden Ansprüche, wobei der Milchbehälter und der zentrale Milchtank abnehmbar fluidisch verbindbar sind.

4. System für einen Milchwirtschaftsbetrieb gemäß einem der vorhergehenden Ansprüche, wobei wenigstens eines von dem Milchbehälter und dem zentralen Milchtank eine Pumpe umfasst, die dazu ausgelegt ist, die Milch aus dem Milchbehälter in den zentralen Milchtank zu pumpen, insbesondere über die Fluidverbindung.

5. System für einen Milchwirtschaftsbetrieb gemäß einem der vorhergehenden Ansprüche, ferner umfassend wenigstens einen weiteren Milchbehälter, der abnehmbar fluidisch mit der Melkvorrichtung verbindbar ist und dazu ausgelegt ist, wenn er mit der Melkvorrichtung verbunden ist, Milch von der Melkung aufzunehmen, und der abnehmbar fluidisch mit dem zentralen Milchtank verbindbar ist.

6. System für einen Milchwirtschaftsbetrieb gemäß einem der vorhergehenden Ansprüche, wobei der Träger eine Greifvorrichtung zum Greifen des Milchbehälters umfasst.

7. System für einen Milchwirtschaftsbetrieb gemäß einem der vorhergehenden Ansprüche, wobei der Träger und der Milchbehälter fest verbunden sind.

8. System für einen Milchwirtschaftsbetrieb gemäß einem der vorhergehenden Ansprüche, wobei der Milchbehälter vom Träger abnehmbar ist und wobei das Handhabungssystem ein Be- und Entladersystem zum automatischen Laden und Abladen des Milchbehälters auf den/vom Träger umfasst.

9. System für einen Milchwirtschaftsbetrieb gemäß einem der vorhergehenden Ansprüche, umfassend eine Milchbehälter-Herstellungseinheit, die dazu ausgelegt ist, den Milchbehälter aus Lagermaterial, das insbesondere einen Kunststoff-Materialvorrat umfasst, herzustellen, und eine Behältertrennvorrichtung, insbesondere ein Schneidemesser, das dazu ausgelegt ist, einen Abschnitt vom Lagermaterial abzuschneiden, und ein Versiegelungsmittel, das dazu ausgelegt ist, den abgeschnittenen Abschnitt zu einer Milchtüte zu versiegeln.

10. System für einen Milchwirtschaftsbetrieb gemäß einem der vorhergehenden Ansprüche, wobei das System für einen Milchwirtschaftsbetrieb mit einer Qualitätskontrollvorrichtung versehen ist, um der Milch von der Melkung eine Qualitätsangabe zuzuweisen.

11. System für einen Milchwirtschaftsbetrieb gemäß Anspruch 10, ferner umfassend eine Kennzeichnungsvorrichtung zum Kennzeichnen des Behälters mit Informationen zur zugewiesenen Qualitätsangabe, insbesondere der Qualitätsangabe.

12. System für einen Milchwirtschaftsbetrieb gemäß Anspruch 10 oder 11, ferner umfassend wenigstens einen zusätzlichen Milch-Bestimmungsort, und wobei das Handhabungssystem dazu ausgelegt ist, in Abhängigkeit von der Qualitätsangabe den Milchbehälter entweder zum Milchtank oder zu einem des wenigstens einen zusätzlichen Bestimmungsortes zu bewegen.

13. System für einen Milchwirtschaftsbetrieb gemäß Anspruch 12, wobei der zentrale Milchtank und der wenigstens eine zusätzliche Milch-Bestimmungsort wenigstens einen Tank für A2-Milch und wenigstens einen anderen Tank für andere Konsummilch umfassen, wobei die Qualitätskontrollvorrichtung dazu ausgelegt ist, Milch von einem oder mehreren ausgewählten Milchtieren eine A2-Milch-Qualität zuzuweisen, wobei das System für einen Milchwirtschaftsbetrieb dazu ausgelegt ist, Milch mit der A2-Milch-Qualitätsangabe zum A2-Milchtank und Konsummilch ohne die A2-Milch-Qualitätsangabe zum wenigstens einen anderen Tank für andere Konsummilch zu transportieren.

14. System für einen Milchwirtschaftsbetrieb nach einem der Ansprüche 10-13, wobei die Qualitätskontrollvorrichtung ein oder mehrere Milchqualitätssensoren umfasst, der/die am Behälter angeordnet ist/sind, insbesondere am Fahrzeug, zum Ermitteln eines Qualitätsparameterwertes der Milch im Behälter.

15. System für einen Milchwirtschaftsbetrieb gemäß einem der vorhergehenden Ansprüche, wobei das System für einen Milchwirtschaftsbetrieb ferner mit einem Reinigungssystem zum Reinigen und/oder Desinfizieren des Milchbehälters versehen ist.

## Revendications

1. Système pour ferme laitière comprenant :
- un système de traite fixe (2) comportant une machine de traite (6), et en particulier un robot de traite (3), pour traire un animal laitier,
- un récipient à lait (9) pouvant être relié de manière fluidique et amovible au système de traite et agencé pour recevoir, lorsqu'il est connecté au système de traite, le lait provenant de la traite,
- une cuve à lait centrale (21), séparée du système de traite, pour stocker le lait provenant d'une pluralité de traites,
- un système de manutention automatique pour manipuler le récipient à lait, et agencé pour déconnecter le récipient à lait du système de traite après chaque traite et pour déplacer le récipient à lait depuis le système de traite jusqu'à la cuve à lait centrale,
dans lequel au moins l'un du système de manutention, du récipient à lait et de la cuve à lait centrale est agencé pour transférer le lait depuis le récipient à lait jusqu'à la cuve à lait centrale, dans lequel le système de manutention comprend un transporteur déplaçable pour transporter le récipient à lait et pour déplacer le récipient à lait jusqu'à la cuve à lait centrale, dans lequel le système de manipulation comprend un système de rails de guidage (30) de préférence ramifié, agencé entre le système de traite et la cuve à lait centrale, dans lequel le transporteur est déplaçable le long du système de rails de guidage,
et/ou
dans lequel le transporteur comprend un véhicule (12) à dispositif de propulsion, en particulier des roues ou des chenilles continues, lequel véhicule est agencé pour se déplacer de manière autonome entre le système de traite et la cuve à lait.

2. Système pour ferme laitière selon la revendication 1, dans lequel le système de traite fixe comprend une ou plusieurs stalles de traite, en particulier un box ou une pluralité de boxes de traite, tels qu'une salle de traite rotative ou une salle de traite en épi.

3. Système pour ferme laitière selon l'une quelconque des revendications précédentes, dans lequel le récipient à lait et la cuve à lait centrale peuvent être connectés de manière fluidique et amovible.

4. Système pour ferme laitière selon l'une quelconque des revendications précédentes, dans lequel au moins l'un du récipient à lait et de la cuve à lait centrale comprend une pompe agencée pour pomper le lait depuis le récipient à lait jusque dans la cuve à lait centrale, en particulier par l'intermédiaire de la connexion fluidique.

5. Système pour ferme laitière selon l'une quelconque des revendications précédentes, comprenant en outre au moins un autre récipient à lait qui peut être connecté de manière fluidique et amovible au dispositif de traite et qui est agencé pour recevoir, quand il est connecté au dispositif de traite, le lait provenant de la traite, et qui peut être connecté de manière fluidique et amovible à la cuve à lait centrale.

6. Système pour ferme laitière selon l'une quelconque des revendications précédentes, dans lequel le transporteur comprend un dispositif de saisie pour saisir le récipient à lait.

7. Système pour ferme laitière selon l'une quelconque des revendications précédentes, dans lequel le transporteur et le récipient à lait sont connectés de manière fixe.

8. Système pour ferme laitière selon l'une quelconque des revendications précédentes, dans lequel le récipient à lait peut être retiré du transporteur, et dans lequel le système de manutention comprend un système de chargement-déchargement pour automatiquement charger le récipient à lait sur le transporteur et le décharger de celui-ci.

9. Système pour ferme laitière selon l'une quelconque des revendications précédentes, comprenant une unité de production de récipient à lait, agencée pour produire ledit récipient à lait à partir d'un matériau brut, en particulier comprenant un stock de matériau plastique et un séparateur de récipient, plus particulièrement un couteau agencé pour couper une partie du matériau brut et un moyen de fermeture agencé pour sceller la partie coupée en une poche à lait.

10. Système pour ferme laitière selon l'une quelconque des revendications précédentes, le système pour ferme laitière étant doté d'un dispositif de contrôle de qualité pour attribuer une indication de qualité au lait de la traite.

11. Système pour ferme laitière selon la revendication 10, comprenant en outre un dispositif de marquage pour marquer le récipient avec des informations concernant l'indication de qualité attribuée, en particulier ladite indication de qualité.

12. Système pour ferme laitière selon la revendication 10 ou 11, comprenant en outre au moins une destination supplémentaire du lait, et dans lequel le système de manutention est agencé pour déplacer le récipient à lait soit jusqu'à la cuve à lait, soit jusqu'à l'une de l'au moins une destination supplémentaire en fonction de ladite indication de qualité.

13. Système pour ferme laitière selon la revendication 12, dans lequel la cuve à lait centrale et l'au moins une destination supplémentaire du lait comprend au moins une cuve à lait pour du lait A2 et au moins une autre cuve pour un autre lait de consommation, dans lequel le dispositif de contrôle de qualité est agencé pour attribuer une indication de qualité de lait A2 au lait provenant d'un ou de plusieurs animaux sélectionnés, le système pour ferme laitière étant agencé pour transporter le lait ayant l'indication de qualité de lait A2 jusqu'à la cuve à lait A2 et le lait de consommation n'ayant pas l'indication de qualité de lait A2 jusqu'à l'au moins une autre cuve à autre lait de consommation.

14. Système pour ferme laitière selon l'une quelconque des revendications 10 à 13, dans lequel le dispositif de contrôle de qualité comprend un ou plusieurs capteurs de qualité de lait, lequel ou lesquels sont agencés sur le récipient, en particulier sur le véhicule, et pour déterminer une valeur paramétrique de qualité du lait dans le récipient.

15. Système pour ferme laitière selon l'une quelconque des revendications précédentes, dans lequel le système pour ferme laitière est doté en outre d'un système de nettoyage pour nettoyer et/ou désinfecter le récipient à lait.
